# EUROPEAN PATENT APPLICATION

(11) **EP 1 205 221 A2**
(43) Date of publication of application: **15.05.2002**
(21) Application number: 01309505.4
(22) Date of filing: 09.11.2001
(51) Int. Cl.: A63F 13/10

(54) **Display control method**

(30) Priority: 09.11.2000 JP 2000342610; 29.06.2001 JP 2001198853
(71) Applicant: Sony Computer Entertainment Inc., Tokyo 107-0052 (JP)
(72) Inventor: Matsuura, Masaya, c/o NanaOn-Sha co., Ltd, Meguro-ku, Tokyo 153-0063 (JP); Matsuura, Kiri, c/o NanaOn-Sha co., Ltd, Meguro-ku, Tokyo 153-0063 (JP); Kojima, Hidehito, c/o Sony Computer Entertainment, Minato-ku, Tokyo 107-0052 (JP); Nakabayashi, Takeru, c/o NanaOn-Sha co., Ltd, Meguro-ku, Tokyo 153-0063 (JP); Murakami, Tomohiko, c/o NanaOn-Sha co., Ltd, Meguro-ku, Tokyo 153-0063 (JP); Mifune, Sachie, c/o NanaOn-Sha co., Ltd, Meguro-ku, Tokyo 153-0063 (JP)
(74) Representative: Turner, James Arthur

(57) **Abstract**

A stage for a game can be made based on an image made or selected by a player or provided by a third party. A substantially infinite variety of stages can be provided thereby. Thus an enjoyable video game that hardly wearies the player can be provided.

## Description

The present invention relates to a display control method, a storage medium having stored therein a display control program, a display control apparatus and a display control program to be executed on a computer. At least embodiments of the invention may be applicable to video game machines or personal computers.

Recent video games have a plurality of stages formed so that the degree of difficulty in playing is gradually advanced.

Such video games shift a playing scene to the next advanced stage, for example, when a player scores over the criteria.

However, as conventional video games are designed so that a player plays on the stage formed by a game-manufacturer, the player has to play the same stage many times through repetitive play. As a result, the player comes to memorizes or guess the upcoming events in the stage, and may gradually lose interest in the video game. Thus conventional video games have a problem that the player may be tired of playing finally.

Various respective aspects and features of the invention are defined in the appended claims. Features from the dependent claims may be combined with features of the independent claims as appropriate and not merely as explicitly set out in the claims.

Embodiments of the present invention can provide a display control method, a storage medium having stored therein a display control program, a display control apparatus and a display control program to be executed on a computer, all of which can prevent a player from being trained and bored with the game by always providing novel stages to the player.

According to the present invention, a stage for a game can be made on the basis of an image made or selected by a player, or an image provided by a third party. A substantially infinite variety of stages can be provided thereby, so that the player can enjoy the game in many unknown stages and enjoyable game that hardly wearies the player can be provided thus.

Various advantages not referred to herein will occur to one skilled in the art upon employing the invention in practice.

The invention will now be described by way of example with reference to the accompanying drawings, throughout which like parts are referred to by like references, and in which:
FIG. 1 is a block diagram schematically showing the construction of a video game machine according to an embodiment of the present invention;
FIG. 2 is a perspective view of a controller provided for the video game machine according to the embodiment;
FIG. 3 is a flowchart showing a general operation flow of the video game machine according to the embodiment;
FIGS. 4A to 4E illustrate a series of displays by the video game machine according to the embodiment;
FIGS. 5A to 5E illustrate another series of displays by the video game machine according to the embodiment;
FIG. 6 illustrates the relation between the time for which a character is holding a missile piece, and the destructive power of the missile piece, in the video game machine according to the embodiment;
FIG. 7 illustrates the relation between the size of an enemy piece held by a character, and the destructive power of the enemy piece, in the video game machine according to the embodiment;
FIG. 8 illustrates the relation between the size of a missile piece held by a character, and the speed of the missile piece, in the video game machine according to the embodiment; and
FIG. 9 illustrates an example of display when the video game machine according to the embodiment is played by two players.

An embodiment of the present invention will be described with reference to the accompanying drawings. It is to be noted that the same or similar reference numerals are applied to the same or similar parts and elements throughout the drawings, and the description of the same or similar parts and elements will be omitted or simplified.

The present invention is applicable to video game machines that make it possible to play video games on the basis of game programs, e.g., stored in storage media such as DVD-ROMs, CD-ROMs, or semiconductor memories.

### Construction of Video Game Machine

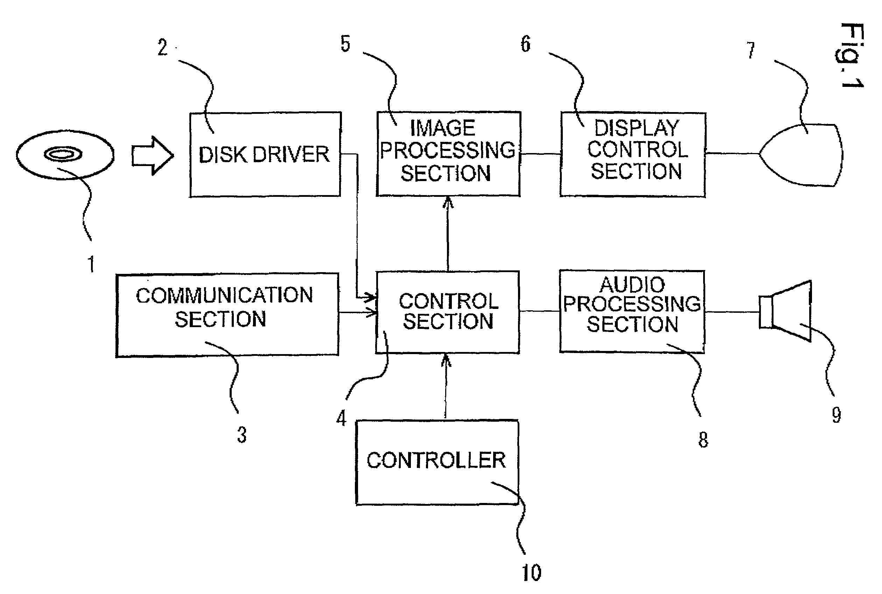

FIG. 1 is a block diagram showing the principal construction of a video game machine according to an embodiment of the present invention. Referring to FIG. 1, the video game machine has a disk driver 2 for reading out a game program, image data, audio data, and the like, from an optical disk 1 such as a DVD-ROM or CD-ROM, a communication section 3 for downloading a game program and the like through a predetermined communication network such as Internet, and a control section 4 for controlling the execution of a video game on the basis of a game program read out from the optical disk 1 or downloaded through the communication section 3.

The video game machine further has an image processing section 5 for processing image data read out from the optical disk 1 in predetermined manners under the control of the control section 4, a display control section 6 for controlling a monitor 7 to display images corresponding to the image data processed by the image processing section 5, an audio processing section 8 for processing audio data read out from the optical disk 1 in predetermined manners under the control of the control section 4 and for controlling the generation of sound based on the audio data through a speaker 9, and a controller 10 for operating a character displayed on the monitor 7.

### Construction of Controller

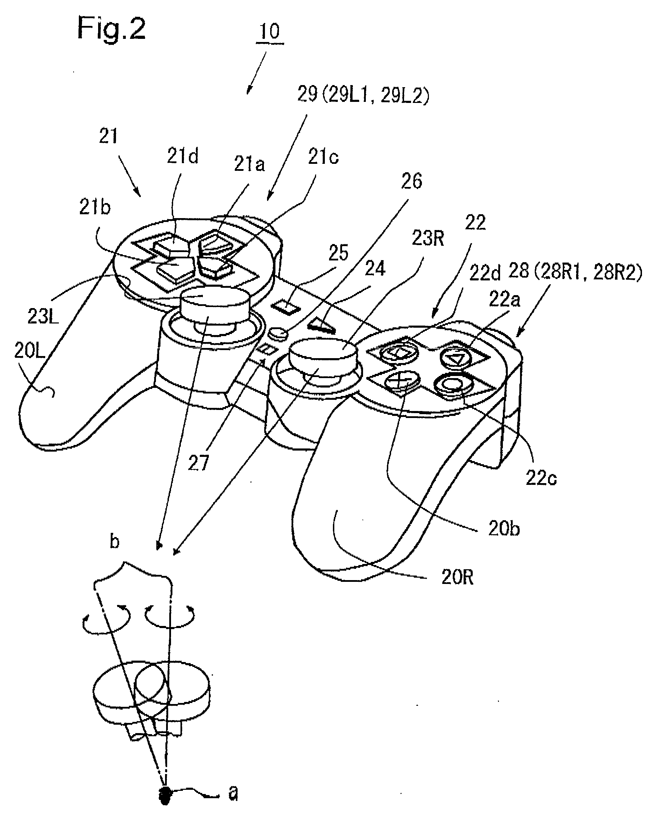

FIG. 2 shows a perspective view of the controller 10. Referring to FIG. 2, the controller 10 has two grips 20R and 20L. A player can grasp the respective grips 20R and 20L by his or her right and left hands to hold the controller 10.

The controller 10 is provided thereon with first and second operation areas 21 and 22 and analogue control sticks 23R and 23L, which are all located so as to be operable by, e.g., the thumbs of the player, while the respective grips 20R and 20L are held in his or her right and left hands.

The first operation area 21 is for, e.g., moving a character in a direction. There are provided an up direction key 21a for moving the character upward, a down direction key 21b for moving the character downward, a right direction key 21c for moving the character rightward, and a left direction key 21d for moving the character leftward.

with this controller 10, the character can be moved not only vertically or horizontally but also obliquely. For example, when the up and right direction keys 21a and 21c are pressed at the same time, the character is moved to the upper right direction. Also, when the down and left direction keys 21b and 21d are pressed at the same time, the character is moved to the lower left direction.

In the second operation area 22, there are provided a Δ button 22a on which a mark Δ is carved and which is used for, e.g., displaying a menu, an × button 22b on which a mark × is carved and which is used for, e.g., canceling the selection of an item of a list, a ○ button 22c on which a mark ○ is carved and which is used for, e.g., fixing the selection of an item of a list, and a □ button 22d on which a mark □ is carved and which is used for, e.g., selecting display/non-display of a list or the like.

Either of the analogue control sticks 23R and 23L can freely be turned in a inclined state such as precession around the vertical axis b at the home position with a point a being fixed as a fulcrum.

Either of the analogue control sticks 23R and 23L is held elect (not inclined) while it is not operated, as illustrated in FIG. 2. This position is referred to as home position. When a player inclines the analogue control stick 23R or 23L, the controller 10 detects values of X-Y coordinates in accordance with the inclination angle and direction of the operated analogue control stick 23R or 23L from its home position, and outputs the coordinate values as an operation output.

The controller 10 is further provided thereon with a start button 24 for starting a game, a select button 25 for selecting an item of a list, and a mode selection switch 26 for selecting an analogue mode or a digital mode. When the analogue mode is selected with the mode selection switch 26, a light-emitting diode (LED) 27 is lit and either of the analogue control sticks 23R and 23L is put in its active state. When the digital mode is selected, the LED 27 is not lit and either of the analogue control sticks 23R and 23L is put in its inactive state.

The controller 10 is further provided with right buttons 28 and left buttons 29, which are located so as to be operable by, e.g., the forefingers (or the middle fingers) of the player, while the respective grips 20R and 20L are held in his or her right and left hands. The right buttons 28 comprises first and second right buttons 28R1 and 28R2, which are disposed in parallel with each other in the thickness of the controller 10. Also, the left buttons 29 comprises first and second left buttons 29L1 and 29L2, which are disposed in parallel with each other in the thickness of the controller 10.

The player can play a game through the following procedure with operating the above-described switches and buttons.

### Operation of Video Game Machine

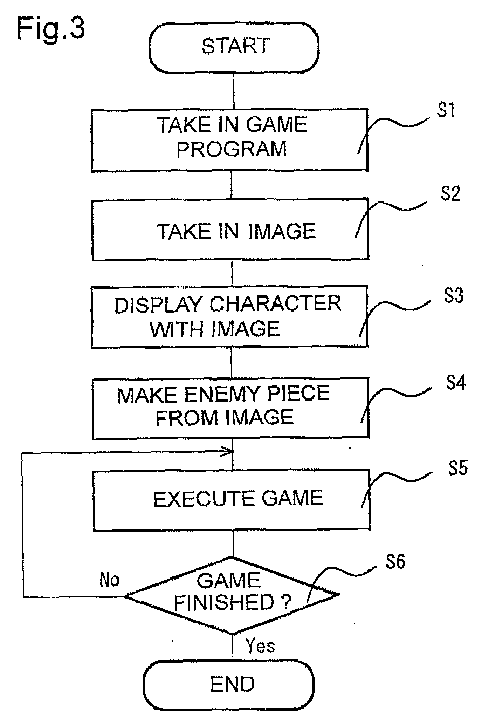

FIG. 3 is a flowchart showing a general operation flow of this video game machine. When this video game machine is powered on, the flow advances to step S1.

In step S1, the control section 4 illustrated in FIG. 1 controls the disk driver 2 to take in a game program from an optical disk 1. Alternatively, the control section 4 controls the communication section 3 to take in a game program from, e.g., a predetermined game provider's server machine via a communication network such as Internet. The flow then advances to step 52.

In step S2, the control section 4 controls the disk driver 2 to take in an image stored in the optical disk 1, which image is to be used as the base of a stage of the game. Alternatively, the control section 4 controls the communication section 3 to take in an image to be used as the base of a stage of the game, for example, from the predetermined game provider's server machine via the communication network such as Internet. The flow then advances to step S3.

Note that such an image may be taken in from another storage medium, such as a floppy disk, a magneto-optic disk, a hard disk, or a semiconductor memory, when the video game machine is connected with a personal computer or a reproducing device with a video camera or the like.

In step S3, the control section 4 controls the image processing section 5 to make a predetermined character image and the taken-in image in accordance with the game program, and to make a display image from those images. The display image thus made is displayed on the monitor 7 through the display control section 6.

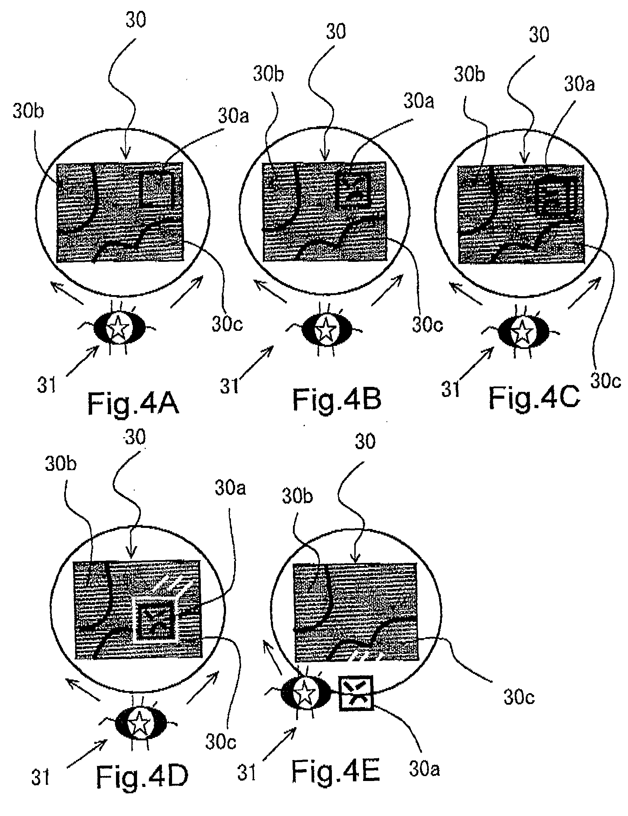

FIG. 4A illustrates an example of such display image. In the example of FIG. 4A, an image 30 taken-in in step S2 as the base of the stage is displayed substantially at the center of the screen of the monitor 7, and a character 31 is displayed outside the image 30. As illustrated in FIG. 4A, the character 31 can be moved clockwise or counterclockwise around the image 30, which will be described later more specifically.

In the next step S4, the control section 4 controls the image processing section 5 to extract the contour of each object existing in the taken-in image, and to make an enemy piece or pieces for attacking the character on the basis of one or more of the objects whose contours have bean extracted.

In the present video game, a parameter value for extracting contours of objects is properly changed, and objects are thereby extracted selectively from one image. However, it is not preferable that considerable number of objects are extracted from one image.

Therefore, for the case that enemy pieces are made from a moving image, the control section 4 sets the parameter value for extracting contours to a predetermined fixed value. In this manner, only objects in accordance with the fixed parameter value can be extracted as objects of the enemy pieces from the moving image whose display contents change in turn, and the number of the enemy pieces can be appropriate.

On the contrary, for the case that enemy pieces are made from a still image, the control section 4 changes the parameter value for extracting contours with the lapse of time. In this manner, different objects are extracted as objects of the enemy pieces one after another from the one still image, and the number of the enemy pieces can be appropriate.

The display image including such objects and an enemy piece is displayed on the monitor 7 through the display control section 6. FIG. 4B illustrates exemplary display of each object whose contour has been extracted and enemy pieces. In the examples of FIG. 4B, three objects 30a to 30c are extracted from one image 30, and the object 30a having a rectangular shape among the three objects is used as an enemy piece.

In general, the appearance of such an object to be used as an enemy piece is modified so that the player can recognize as an enemy piece. In the illustrated example, which is for the purpose of example, the image processing section 5 adds eyes and a mouth to the object 30a as illustrated in FIG. 4B to thereby enable the player to recognize the object 30a as an enemy piece.

In the next step S5, the control section 4 controls the execution of this video game on the basis of the taken-in game program. The flow then advances to step S6.

Here, the contents of the present video game will be described more specifically. As described above, to the object 30a as an enemy piece, eyes and a mouth are added. After this, the control section 4 controls the image processing section 5 such that the object 30a (hereinafter referred to as enemy piece 30a) is three-dimensionally displayed (it appears to be floated) as illustrated in FIG. 4C.

The control section 4 then controls the image processing section 5 such that the enemy piece 30a three-dimensionally displayed is brightened. More specifically, the control section 4 controls the image processing section 5 to raise gradually the brightness level of the whole or part of the enemy piece 30a and display it.

This display indicates that the enemy piece 30a is being charged with energy. Such a display of the enemy piece 30a with its brightness level being gradually raised can make the player feel that the enemy piece 30a is dangerous.

The control section 4 then controls the image processing section 5 such that the enemy piece 30a starts to move linearly toward the character 31, as illustrated in FIG. 4D, at the timing when the raising brightness level reaches a predetermined level.

In the illustrated example, although the enemy piece 30a moves linearly toward the character 31, the enemy piece 30a may move curvedly or chase the character 31 in another game design.

Besides, in order that the player can easily grasp the conditions in the screen, the control section 4 controls the image processing section 5 such that two or more enemy pieces never overlap or appear at once.

When the enemy piece 30a moving toward the character 31 appears, the player operates the character 31 through the controller 10 in order that the enemy piece 30a can not collide with the character 31.

In the illustrated example, the character 31 can be moved clockwise or counterclockwise around the image 30, as described above. The direction and speed of movement of the character 31 can be controlled with the left analogue control stick 23L (or the right analogue control stick 23R) of the controller 10 illustrated in FIG. 2. When the player operates the analogue control stick 23L to incline leftward, the control section 4 controls the image processing section 5 such that the character 31 moves clockwise. Contrastingly, when the analogue control stick 23L is operated to incline rightward, the control section 4 controls the image processing section 5 such that the character 31 moves counterclockwise.

The speed of movement of the character 31 changes in accordance with the inclination angle of the analogue control stick 23L. When the inclination angle of the analogue control stick 23L is large, the control section 4 controls the image processing section 5 such that the character 31 moves at high speed. Inversely, when the inclination angle of the analogue control stick 23L is small, the control section 4 controls the image processing section 5 such that the character 31 moves at low speed. That is, the larger the inclination angle of the analogue control stick 23L is, the faster the character 31 moves.

In the present video game, the contours of objects are extracted and converted into enemy pieces one after another, and each enemy piece in turn rushes for the character 31 (as if each part of one image in turn rushes for the character 31). The player enjoys this game with operating the analogue control stick 23L in order to avoid each enemy piece in turn rushing for the character 31, as illustrated in FIG. 4E.

In the present video game, the player cannot only move the character 31 to avoid each enemy piece, but also shoot away the enemy piece with a missile piece.

More specifically, although it is as above mentioned for one image to be divided into a plurality of objects and for each object to be converted into enemy pieces one after another and to rush for the character, when the character catches one of the objects not being converted into enemy pieces, the object caught by the character can be used as a missile piece. The missile piece can be thrown to and collided with the enemy piece that is rushing for the character, and the enemy piece can be shot away thus.

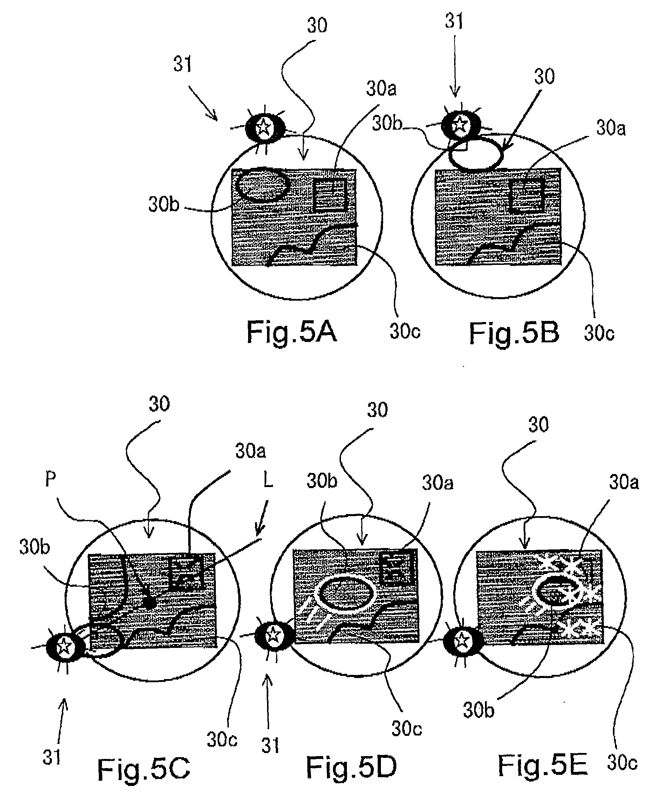

This will be described more specifically with reference to an illustrated example. FIG. 5A illustrates an image 30 divided into each object 30a to 30c. As illustrated in FIG. 5A, when the player likes to catch a missile piece, he or she operates the analogue control stick 23L of the controller 10 to move the character 31 near a desired object. FIG. 5A illustrates the example that the player has moved the character 31 near the object 30b to catch the object 30b as a missile piece.

After the player has moved the character 31 near a desired object, he or she presses, e.g., the ○ button 22c of the controller 10 illustrated in FIG. 2. The control section 4 illustrated in FIG. 1 then controls the image processing section 5 such that the character 31 catches the object closest to the character 31 at the timing when the ○ button 22c is pressed. In the illustrated example, as in FIG. 5B, the character 31 catches the object 30b that is closest to the character 31.

When the character catches and holds the missile piece, the control section 4 controls the image processing section 5 to display a straight line L extending from the character 31 through the center P of the image (the center of the circular orbit of the character 31).

This straight line L indicates the course of the missile piece. When the player operates to incline the analogue control stick 23L with pressing the ○ button 22c, the character 31 is moved clockwise or counterclockwise and the straight line L is moved accordingly. Thus, the player moves the character 31 by operating to incline the analogue control stick 23L with pressing the ○ button 22c so that the enemy piece 30a may come to be on the straight line L.

The destructive power of the missile piece, which is an object held by the character, is determined by the time for which the player is pressing the ○ button 22c, and the size (area) of the object. Besides, the speed of the missile piece is determined by the size (area) of the object.

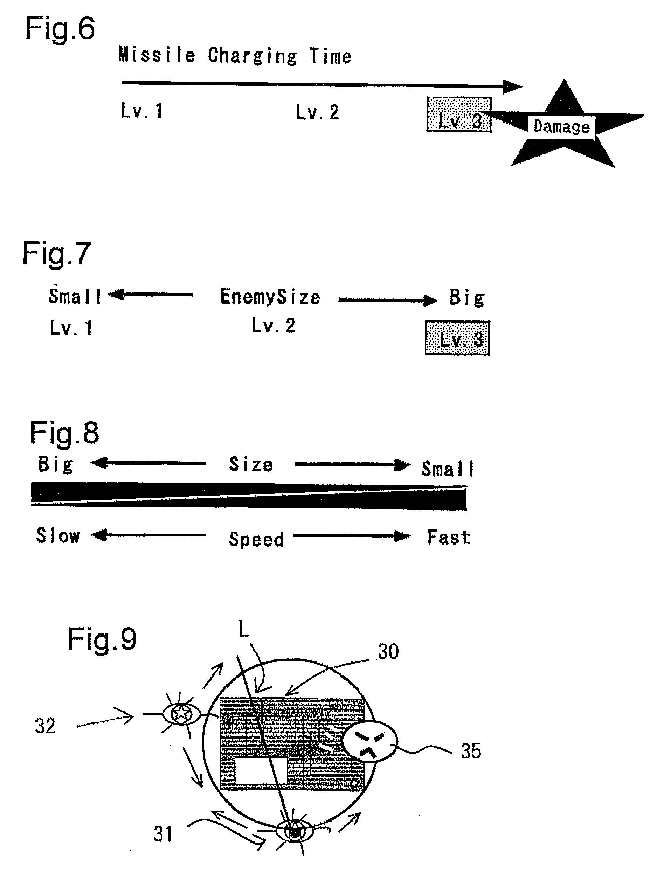

More specifically, at the timing when the ○ button 22c is pressed, the control section 4 starts the count of the time for which the ○ button 22c is being pressed. FIG. 6 illustrates the relation between the destructive power of the missile piece and the time for which the ○ button 22c is being pressed. Referring to FIG. 6, the destructive power of the missile piece increases stepwise as level 1 (Lv. 1), level 2 (Lv. 2), and level 3 (Lv. 3) in accordance with the time for which the ○ button 22c is being pressed. The control section 4 thus determines the destructive power of the missile piece in accordance with the time for which the ○ button 22c is being pressed.

However, when the time for which the ○ button 22c is being pressed exceeds a predetermined time, the missile piece explodes as it is held by the character. For this purpose, when the time started the count to the timing on which the ○ button 22c is pressed exceeds the predetermined time, the control section 4 controls the image processing section 5 to explode the missile piece held by the character.

When the missile piece has exploded in this state, the player receives some penalty, e.g., the character is damaged to be dull in movement or the game is over. Thus, the player plays the game with controlling the time for which he or she is pressing the ○ button 22c so that the destructive power as high as possible may be obtained without holding the missile piece such for a long time.

In this case, such a level indicator as illustrated in FIG. 6 may be displayed on the monitor 7 in order to show the player the current destructive power of the missile piece.

After moving the character so that the enemy piece may come to be on the straight line L, when judging that the destructive power of the missile piece has reached a proper level, the player releases the ○ button 22c.

when the ○ button 22c is released, the control section 4 controls the image processing section 5 such that the missile piece, which has been held by the character, is released from the character and moves linearly to pass through the center of the image.

FIGS. 5C to 5E illustrate the process through which the missile piece released from the character collides with the enemy piece. Referring to FIGS. 5C to 5E, at the timing when the player releases the ○ button 22c, the object 30b, which has been held by the character 31 as a missile piece, starts to move toward the enemy piece 30a to pass through the center P of the image 30, as illustrated in FIG. 5C. If the enemy piece 30a is just on the straight line along which the object 30b as a missile piece moves, the object 30b collides with the enemy piece 30a, as illustrated in FIG. 5E.

In the present video game, the enemy piece moves linearly toward the character so as to pass through the center P and the missile piece held by the character also linearly moves so as to pass through the center P of the image. Thus, operation for aiming the missile piece at the enemy piece can be performed only by moving the character around the image. There is required no operation of complicated aiming procedure. The player can therefore easily pay attention to the entire image on the screen, to bend all his or her energies on playing the game.

The destructive power of the missile piece is determined not only according to the time for which the ○ button 22c is being pressed, but also according to the size of the missile piece. The bigger the size of the missile piece becomes, the more the destructive power of the missile piece increases stepwise as level 1 (Lv. 1), level 2 (Lv. 2), and level 3 (Lv. 3).

Similarly, a hit point(endurance) of the enemy piece 30a is determined according to the size of the object which is the basis of the enemy piece 30a, the bigger the size of the object becomes, the higher the hit point of the enemy piece becomes stepwise as level 1(Lv. 1), level 2 (Lv. 2), and level 3 (Lv. 3).

Consequently, the missile piece, having its destructive power determined in accordance with the time for which the ○ button 22c is being pressed and with the size of the missile piece is released toward the enemy piece. And, when the missile piece collides with the enemy piece, the enemy piece sustains a damage corresponding to the time for which the ○ button 22c is being pressed, and the size of the missile piece.

When the destructive power of the missile piece having collided with the enemy piece exceeds the hit points (endurance) of the enemy piece, the enemy piece is destroyed by the missile piece or becomes dull in movement. When the destructive power of the missile piece is below the hit points of the enemy piece, the enemy piece which collided with the missile piece rebounds or thrusts through the missile piece to collide with the character.

If the character that is holding a missile piece collides with the enemy piece, then the missile piece explodes as it is held by the character, and both of the character and the enemy piece sustains a predetermined damage.

In the above description, when the missile piece has collided with the enemy piece, the missile piece explodes to destroy the enemy piece. In this case, however, missile pieces may include ones to misfire, and such a misfiring missile piece may not cause any damage to the enemy piece.

In addition to the above description, eyes and a mouth are added to the enemy piece and the enemy piece rushes linearly for the character, however, various appearances may be added in accordance with kinds of enemy pieces, and the enemy pieces may rush in various courses, not only linear but curved, in accordance with the added appearances.

Furthermore, the speeds of missile pieces may vary in accordance with the sizes (areas) of the missile pieces, for example, as illustrated in FIG. 8, the bigger the size of the missile piece is, the slower the speed of the missile piece is.

In the present video game, the player can repulse enemy pieces not only by colliding missile pieces with the enemy pieces but also by the following methods.

When the player presses, e.g., the × button 22b of the controller 10 illustrated in FIG. 2, the control section 4 controls the image processing section 5 such that the character jumps at the timing when the × button 22b is pressed. Thus, by choosing a proper timing when an enemy piece is just going to collide with the character, the player can press the × button 22b so that the character can jump to avoid the enemy piece. In this case, while the character is jumping, it may somersault or quickly turn.

Besides, when the player presses, e.g., the Δ button 22a of the controller 10 illustrated in FIG. 2, the control section 4 controls the image processing section 5 such that the character catches the enemy piece and holds it while the Δ button 22a is being pressed. In this state, when the player releases the Δ button 22a, the control section 4 controls the image processing section 5 such that the character throws the enemy piece away. Thus, the player can operates the character so as to catch and then throw away the enemy piece. This makes the game more exciting.

The contents of the present video game will be described more specifically. When an enemy piece has collided with the character, the character is damaged by, e.g., one point. The appearance of the character is changed in accordance with such damage points, for example, when the character has sustained a predetermined amount of damages from enemy pieces, the appearance of the character is devolutionarily changed into that of a lower thing. Inversely, when the character has caused a predetermined amount of damages to enemy pieces, the appearance of the character is evolutionarily changed into that of a higher thing.

In the present video game, for example, when the character has sustained three points of damages from enemy pieces, the appearance of the character is changed into that of a thing devolutionary by one step. Inversely, when the character has successively destroyed five enemy pieces without sustaining any damage, the appearance of the character is changed into that of a thing evolutionary by one step.

When the character in the last devolutionary appearance has sustained, e.g., three points of damages from enemy pieces, the game is over. On the other hand, when the character is surviving at the end of the video reproduction of the stage for, e.g., two or three minutes, the player can clear the game.

In step S6 of the flowchart of FIG. 3, the control section 4 checks as to whether or not the game has ended. When the game has not ended, the flow returns to step S5 to continue the present video game as described above. When the game has ended, the entire routine of the flowchart of FIG. 3 is then ended.

In the present video game, the control section 4 calculates the score as follows.

A predetermined score is added every time when the character destroys an enemy piece. At this time, when the character destroys an enemy piece with a large area missile piece as described above, since it means that the enemy piece is destroyed by a slow missile piece and there is difficulty, the higher score is added.

Besides, when the character destroys an enemy piece with a missile piece having a high destructive power as described above, since it means that the player had to be pressing the ○ button 22c so that the missile piece may not explode due to the destructive power excessively charged and there is also difficulty, the higher score is added.

Furthermore, when the character successively destroys a predetermined number of enemy pieces with missile pieces without sustaining any damage from the enemy pieces, since there is also difficulty, the higher score is added.

Furthermore, when the character in the last evolutionary appearance destroys an enemy piece, e.g., double the normal score is added. In the present video game, as described above, when the character has sustained three points of damages from enemy pieces, the appearance of the character is changed into that of a thing devolutionary by one step. In the last evolutionary appearance, however, when the character has sustained only one damage from an enemy piece, the appearance of the character is changed into that of the one-step devolutionary thing. (That is, in compensation for obtaining double the normal score, the last evolutionary appearance is degraded by only one damage though any other appearance is degraded by three damages.)

An destroyed enemy piece may leave a predetermined item and a predetermined score may be added when the character acquires the item. In this case, such items may include not only ones for adding a score but also ones for subtracting a score.

Although a single play mode in which one player operates one character has been described, in the present video game a multi-play mode in which two or more players operate their respective characters is also possible.

FIG. 9 illustrates an example of the multi-play mode, in which two players operate their respective characters. In this two-players mode, the control section 4 controls the image processing section 5 to display a character 31 to be operated by the first player and a character 32 to be operated by the second player. The characters 31 and 32 can move clockwise or counterclockwise on the same circular orbit around the image 30. When the characters 31 and 32 collide with each other thereon, the faster character springs away the slower character along the circular orbit. In another game design, the characters 31 and 32 may pass each other on the circular orbit without colliding.

Also in this two-players mode, objects are extracted from the image 30 and each of them in turn rushes as an enemy piece 35 for either the character 31 or 32. Either player for the characters 31 and 32 can counterattack the enemy piece 35 by colliding a missile piece with the enemy piece 35. The finally surviving player (one having the higher score if both are surviving) is the winner of the game.

In this multi-play mode, the players may oppose each other, in which each player collides missile pieces with his or her opposed player's character.

As is clear from the above description, in the video game machine according to this embodiment, various game stages full of variety are produced by extracting objects from an image using a fixed value or parameters variable with minute time.

In other words, relatively introducing such parameters into the relation between an object to be extracted and an extractor allows such parameters to be directly reflected to stage constitution or the like, so that an infinite variety of stages can be provided.

Thus the video game machine according to this embodiment can always provide a novel stage to the player, and can avoid a problem that the player memorizes or can guess the upcoming events in the successive stage after being trained through repetitive play of the game. The video game machine according to this embodiment, therefore, can prevent the player from being trained and bored with the game, and can provide the game with everlasting fun.

The above-described embodiment is only part of the examples of the present invention. Although the character moves on a circular orbit outside a rectangular image in the above embodiment, the character may move on a circular orbit inside the rectangular image. Furthermore, the character may move on a rectangular orbit along the periphery of the rectangular image. The image may be not rectangular but circular and the character may move along the circumference of the image. The image may be displayed with being expanded, reduced, rotated, or the like.

It is therefore to be understood that the present invention may be practiced otherwise than as specifically described herein without departing from the scope thereof.

In so far as the embodiments of the invention described above are implemented, at least in part, using software-controlled data processing apparatus, it will be appreciated that a computer program providing such software control and a transmission, storage or other medium by which such a computer program is provided are envisaged as aspects of the present invention.

## Claims

1. A display control method comprising the steps of:
capturing an image;
extracting a partial image from the captured image;
adding a predetermined visual effect to the extracted partial image; and
displaying the partial image added with the predetermined visual effect in a moving motion.

2. The display control method according to Claim 1, wherein
a moving image is captured in the step of capturing the image; and
the partial image is extracted using fixed parameters in the step of extracting the partial image.

3. The display control method according to Claim 1, wherein
a still image is captured in the step of capturing the image; and
the partial image is extracted using variable parameters in the step of extracting the partial image.

4. The display control method according to Claim 1, 2 or 3, wherein a visual effect by which the extracted partial image can stereographically be seen is added in the step of adding the predetermined visual effect.

5. The display control method according to Claim 1, 2, 3 or 4, wherein a visual effect by which the extracted partial image can shiningly be seen is added in the step of adding the predetermined visual effect.

6. The display control method according to Claim 1, 2, 3, 4 or 5, further comprising the steps of:
displaying a predetermined game character; and
displaying the partial image together with the game character in a moving motion in response to operation for moving the game character.

7. The display control method according to Claim 6, further comprising the steps of:
displaying, together with the game character, a straight line passing the center of the entire captured image; and
displaying according to a predetermined timing the partial image, which has been displayed in a moving motion together with the game character, in a moving motion along the straight line.

8. The display control method according to Claim 7, wherein the partial image is displayed in a moving motion at a speed corresponded to the size of the partial image in the step for displaying the partial image in a moving motion along the straight line.

9. The display control method according to Claim 8, further comprising the steps of:
detecting contact between the partial image displayed in a moving motion along the straight line and the partial image in a moving motion which is displayed so as to pass the center of the entire image; and
adding, upon detection of the contact between both partial images, a visual effect corresponded to the size of the partial image in a moving motion along the straight line to at least the partial image in a moving motion along the straight line.

10. A storage medium having recorded therein a display control program, wherein the program comprises the steps of:
capturing an image;
extracting a partial image from the captured image;
adding a predetermined visual effect to the extracted partial image; and
displaying the partial image added with the predetermined visual effect in a moving motion.

11. A display control device comprising:
image capture means for capturing an image;
image extraction means for extracting a partial image from the image captured by the image capture means;
visual effect addition means for adding a predetermined visual effect to the partial image extracted by the image extraction means; and
display means for displaying the partial image in a moving motion added with the predetermined visual effect by the visual effect addition means.

12. A display control program comprising the steps of:
capturing an image;
extracting a partial image from the captured image;
adding a predetermined visual effect to the extracted partial image; and
displaying the partial image added with the predetermined visual effect in a moving motion.
